# EUROPEAN PATENT APPLICATION

(11) **EP 0 886 249 A1**
(43) Date of publication of application: **23.12.1998**
(21) Application number: 97118918.8
(22) Date of filing: 30.10.1997
(51) Int. Cl.: G07F 13/06, A47J 31/40

(54) **Device for dosing and preparing instant beverages for automatic and semiautomatic vending machines**

(30) Priority: 17.06.1997 IT MO970111
(71) Applicant: Premark International Holdings B.V., 3447 Woerden (NL)
(72) Inventor: Bodo, Mauro, 42100 Reggio Emilia (IT)
(74) Representative: De Nova, Roberto

(57) **Abstract**

A device for dosing and preparing instant beverages for automatic and semiautomatic vending machines comprises at least one tank (3) for containing dilutable substances provided with a dispensing outlet (4) which is directed downwards and leads internally below the upper rim (5a) of an underlying open-top tray (5) which has a preset volume and the bottom of which has at least one port (6) for connection to a valve means (7) for defining doses, which in turn leads into a device (8) for mixing the doses with a diluent liquid.

## Description

The present invention relates to a device for dosing and preparing instant beverages for automatic and semiautomatic vending machines.

Machines essentially composed of a frame which contains a refrigeration (or heating) unit connected to a water supply coil and to a tank for containing dilutable solutions in the fluid concentrated state or in powder form have long been used for the automatic vending of beverages to the public.

At the consumer's request, which is made by means of a conventional command, a preset volumetric dose of those substances is dispensed from the tank and is mixed with an adapted amount of diluent liquid, usually constituted by water, and finally the instant beverage thus prepared is dispensed for consumption through an associated outlet below which a cup is positioned.

Conventional machines currently use, during the dispensing of the dose of dilutable substance, a pumping unit or an electromechanical means with a preset number of cycles and/or volumes, which draws the substance from a tank and sends it to the region for mixing with the diluent liquid (water).

The costs of these pumping units or electromechanical means and of the accessory components directly correlated therewith are significant and increase the overall costs of vending machines.

The operations for the ordinary and extraordinary maintenance of the above components are also substantially complicated and accordingly require long completion times and are expensive.

The technical aim of the present invention is to solve the above problems of the conventional machines by providing a device for dosing and preparing instant beverages for automatic and semiautomatic vending machines which allows to provide dosages of the dilutable substances with maximum precision and regardless of the extent to which the tank is filled.

Another object of the present invention is to provide an improved device for dosing and preparing instant beverages for automatic and semiautomatic vending machines which is cheap to manufacture and maintain.

This aim, this object and others which will become apparent hereinafter are achieved by a device for dosing and preparing instant beverages for automatic and semiautomatic vending machines, comprising at least one tank for containing dilutable substances which is provided with a dispensing outlet directed downwards, characterized in that said outlet leads internally below the rim of an underlying open-top tray which has a preset volume and the bottom of which has at least one port for connection to a valve means for forming doses, which in turn leads into a device for mixing said doses with a diluent liquid.

Further characteristics and advantages of the present invention will become apparent from the description of a preferred embodiment of a device for dosing and preparing instant beverages for automatic and semiautomatic vending machines, illustrated only by way of non-limitative example in the accompanying drawings, wherein:

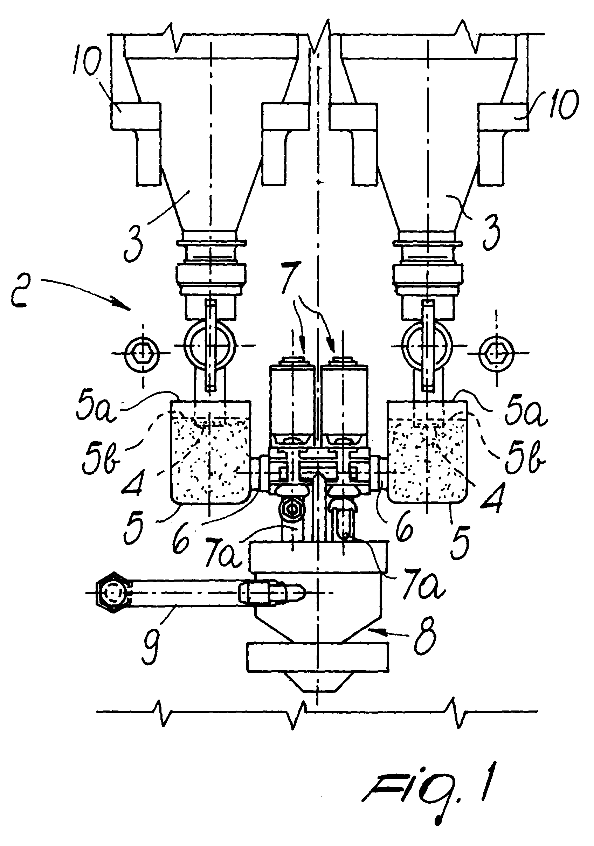

figure 1 is a front view of a device for dosing and preparing instant beverages according to the present invention;

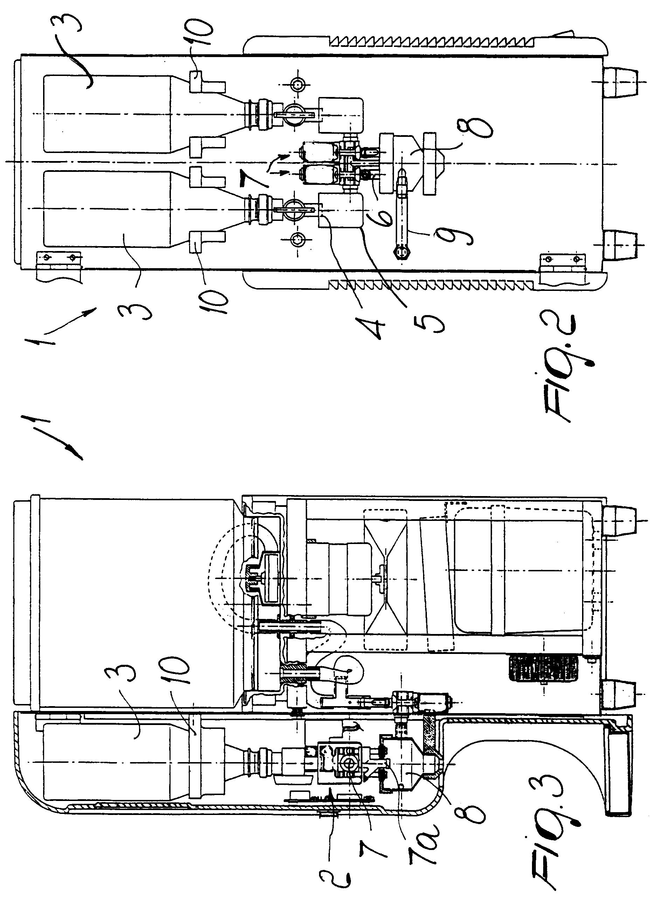

figure 2 is a reduced-scale view of the internal part of an automatic vending machine for instant beverages, equipped with the device according to the present invention;
figure 3 is a side view, in phantom lines, of the part shown in figure 2.

With particular reference to the above figures, the reference numeral 1 designates a beverage vending machine which is equipped with the device 2 for dosing and preparing instant beverages, according to the present invention.

The device, in the preferred embodiment shown in the drawings, comprises at least one, but preferably two tanks 3 for containing dilutable substances, either concentrates or powders, both of which have a respective dispensing outlet 4 which is directed downwards.

Both outlets 4 lead inside and at a level which lies below the rim 5a of corresponding open-top trays 5 which have a preset volume and are installed directly below the outlets; the bottoms of the trays 5 have each at least one respective port 6 for connection to valve means 7 of the timed type which are adapted to define the doses.

The valve means 7 in turn lead, by means of adapted ducts 7a, into a device 8 for mixing the doses with a diluent liquid, usually water, which arrives from a supply line 9.

In order to adjust the level of the dilutable substances inside the trays 5, the distance between the outlets 4 and the rim 5a can be adjusted by corresponding means, essentially constituted by a support 10 on which each one of the tanks 3 is mounted; the support is in turn mounted so that it can slide vertically on the conventional frame, not shown for the sake of simplicity, of the vending machine, and can be fixed at preset levels.

The operation of the present invention is as follows: the tanks 3 are placed on the supports 10 so that their respective outlets 4 are at a preset level below the rim 5a of the trays 5.

By simple gravity, and therefore without the use of any specifically provided electromechanical element, the concentrate falls into the tray 5 up to the level 5b, determined by atmospheric pressure, which prevents the further flow thereof out of the tank 3, the upper region of which is subjected to negative pressure.

The trays 5 are connected, by means of the ports 6, to the valve units 7, which can be activated and controlled with a conventional timer means which can be preset as required and determines its opening and closure cycles and the consequent descent of the concentrate into the tray 5.

The amount of concentrate that flows out of the tray 5 and passes through the valve means 7 for the preset time constitutes the volumetric dose of the concentrate, which collects, again by gravity, in the underlying mixing tray 8.

To conclude, use of the improved device allows to maintain the volumetric dose of concentrate respectively constant.

It should be noted that by changing the vertical position of the supports 10 and, therefore, of the tanks 3, with respect to the upper rims 5a of the trays 5, it is possible to change the filling level thereof and accordingly change the amount of concentrate to be used.

It is thus evident that the described invention achieves the intended aim and object.

The present invention thus conceived is susceptible of numerous modifications and variations, all of which are within the scope of the inventive concept.

All the details may furthermore be replaced with other technically equivalent elements.

In the practical embodiment of the present invention, the materials used, as well as the shapes and the dimensions, may be any according to the requirements without thereby abandoning the scope of the protection of the claims that follow.

Where technical features mentioned in any claim are followed by reference signs, those reference signs, have been included for the sole purpose of increasing the intelligibility of the claims and accordingly, such reference signs do not have any limiting effect on the interpretation of each element identified by way of example by such reference signs.

## Claims

1. A device for dosing and preparing instant beverages for automatic and semiautomatic vending machines, comprising at least one tank for containing dilutable substances which is provided with a dispensing outlet which is directed downwards, characterized in that said outlet leads internally below the rim of an underlying open-top tray which has a preset volume and the bottom of which has at least one port for connection to a valve means for forming doses, which in turn leads into a device for mixing said doses with a diluent liquid.

2. A device according to claim 1, characterized in that the distance between said outlet and said rim can be adjusted by means of corresponding means.

3. A device according to claim 2, characterized in that said distance adjustment means are constituted by a support of said tank which is mounted so that it can slide vertically on the conventional frame of the vending machine and can be fixed at preset elevations.

4. A device according to claim 1, characterized in that it further comprises timer means to activate and control said valve means.
